# EUROPEAN PATENT APPLICATION

(11) **EP 4 660 032 A1**
(43) Date of publication of application: **10.12.2025**
(21) Application number: 24180685.0
(22) Date of filing: 07.06.2024
(51) Int. Cl.: B60W 10/02, B60K 17/36, B60W 10/06, B60W 10/10, B60W 30/18, B60W 50/00, B60W 50/04

(54) **POWERTRAIN SYSTEM AND METHOD FOR CONTROLLING A POWERTRAIN SYSTEM OF A VEHICLE**

(71) Applicant: VOLVO TRUCK CORPORATION, 405 08 Göteborg (SE)
(72) Inventor: STJERNBERG, Oscar, 411 35 GÖTEBORG (SE); WILHELMSSON, Martin, 423 39 TORSLANDA (SE); ERIKSSON, Anders, 423 49 TORSLANDA (SE); PATKE M, Pramod, 417 23 GÖTEBORG (SE)
(74) Representative: Kransell & Wennborg KB

(57) **Abstract**

The present disclosure relates to a powertrain system (11) oof a vehicle (10), the powertrain system comprising: a tandem drive axle system (60) and an internal combustion engine (12) configured to provide power to the tandem drive axle system (60) via a transmission (17), the tandem drive axle system having a first drive axle (62) and a second drive axle (64), and further controllable to a disengaged state, in which the second drive axle is disengaged relative to the first drive axle, allowing drive wheels of the second drive axle to free-roll, the powertrain system being operable in a number of operational modes comprising at least an engine stop freewheeling mode (ES-FM), in which an output shaft of the engine is non-rotating, and the engine is disconnected from the drive wheels; wherein the powertrain system further comprises a controller (100) comprising processing circuitry (102) configured to: predict an opportunity for operating the powertrain system in the freewheeling mode; determine to disengage the tandem drive axle system in response to the predicted opportunity for operating the powertrain system in the freewheeling mode; and control the tandem drive axle system to the disengaged state; and control the powertrain system into the freewheeling mode.

## Description

### TECHNICAL FIELD

The disclosure relates generally to the field of controlling a powertrain system of a vehicle, while the vehicle is moving, and, more specifically, to an automatically controlled powertrain system for vehicles. In particular aspects, the disclosure relates to a computer system, powertrain system, vehicle and methods for controlling an engine of a vehicle, while the vehicle is moving. The disclosure can be applied to any type of vehicle, including heavy-duty vehicles, such as trucks, buses, and construction equipment, among other vehicle types. Although the disclosure may be described with respect to a particular vehicle, the disclosure is not restricted to any particular vehicle.

### BACKGROUND

Conventional internal combustion engine vehicles operate continuously when the engine is running, even when idling at traffic lights, stuck in traffic, or during extended periods of inactivity. This constant engine operation results in unnecessary fuel consumption and increased emissions, contributing to environmental pollution and increased fuel costs for vehicle owners. To address these issues, various stop and start technologies have been developed, such as engine idle stop-start systems, which shut off the engine when the vehicle is stationary and automatically restart it when the driver releases the brake or engages the accelerator.

In recent years, there has been a growing demand for more sophisticated and intelligent engine stop-and-start systems for heavy-duty vehicles that can adapt to a wider range of driving conditions. The development of automatic and predictive engine stop-and-start systems addresses these challenges by incorporating predictive algorithms, real-time data sources, and advanced control strategies. Automatic and predictive engine stop-and-start systems aim to provide smoother, more efficient, and less intrusive engine stop-and-start experiences for drivers while increasing fuel savings and emissions reduction.

However, in connection with the use of such systems in a vehicle, such as a heavy-duty vehicle, there is still a need for further improving the operations of the powertrain system, while the vehicle is moving.

### SUMMARY

According to a first aspect of the disclosure, there is provided a powertrain system for a vehicle. The powertrain system comprises a tandem drive axle system and an internal combustion engine configured to provide power to the tandem drive axle system via a transmission. The tandem drive axle system comprises a first drive axle connectable to a first set of drive wheels and a second drive axle connectable to a second set of drive wheels. Moreover, the tandem drive axle system is controllable to a disengaged state, in which the second drive axle is disengaged relative to the first drive axle, allowing the drive wheels of the second drive axle to free-roll. Also, the powertrain system is operable in a number of operational modes comprising at least an engine stop freewheeling mode, in which an output shaft of the engine is non-rotating, and the engine is disconnected from the drive wheels; wherein the powertrain system further comprises a controller comprising processing circuitry. The processing circuitry is configured to predict an opportunity for operating the powertrain system in the engine stop freewheeling mode, determine to disengage the tandem drive axle system in response to the predicted opportunity for operating the powertrain system in the engine stop freewheeling mode, control the tandem drive axle system to the disengaged state, and control the powertrain system into the engine stop freewheeling mode.

The first aspect of the disclosure may seek to reduce driveline resistance during so-called freewheeling with the engine shutdown, thus improving energy efficiency. The disclosure is based on the insight that controlling the suitable disengagement of the tandem drive axle system can enhance vehicle performance during freewheeling with the engine shutdown. Specifically, during this operational mode, the output shaft of the engine is non-rotating, and the engine is disconnected from the drive wheels. By managing the disengagement of the tandem drive axle system effectively, it becomes possible to reduce driveline resistance, thus improving energy efficiency. To this end, the aspect of the disclosure may seek to provide a powertrain system that includes a controller capable of predicting opportunities for operating in an engine stop freewheeling mode and subsequently disengaging the tandem drive axle system. The system aims to reduce mechanical resistance by allowing the second drive axle to free roll when it is not required for propulsion. Such reduction in resistance helps to conserve energy and improve overall efficiency, particularly during conditions where the vehicle can coast without the need for engine power.

A technical benefit may include the enhanced control over the operational state of the powertrain system, particularly in terms of managing the disengagement of the tandem drive axle system. This control facilitates a reduction in driveline resistance during freewheeling modes, leading to improved energy efficiency. Additionally, the predictive capabilities of the system allow for timely disengagement of the tandem drive axle, enhancing the balance between performance and fuel economy. By reducing unnecessary mechanical drag, the system provides smoother transitions and better fuel savings during freewheeling with the engine off, such as during downhill travel. Mechanical drag typically refers to the internal resistive forces that oppose motion within the drivetrain. Reducing these forces through effective disengagement of the tandem drive axle system during freewheeling modes helps to improve energy efficiency and overall vehicle performance.

As used herein, the terms "free-rolling", "free-roll" or "free-roll" typically refer to a state of the tandem drive axle system, in which the axles are mechanically disconnected from each other so that the wheels of the second drive axle can free-rolling. The wheels of the second drive axle are thus in a state where the wheels can roll independent of the wheels of the first drive axle.

In the engine stop freewheeling mode, the output shaft of the engine is non-rotating, and the engine is disconnected from the drive wheels either by setting the gear in neutral, or disconnecting the engine from the drive wheels by opening the clutch to a disengaged state. The provision that the output shaft of the engine is non-rotating typically corresponds to an engine shutdown state.

Optionally in some examples, including in at least one preferred example, the processing circuitry may be configured to predict an opportunity for operating the powertrain system in the engine stop freewheeling mode based on any one of topography data and vehicle data. A technical benefit may include improved prediction accuracy for entering the engine stop freewheeling mode by leveraging topography and vehicle data, allowing the system to improve the timing of disengagement for better fuel efficiency and reduced wear on mechanical components.

Optionally in some examples, including in at least one preferred example, the processing circuitry may be configured to identify an upcoming engine stop freewheeling mode opportunity along a route based on any one of topography data and vehicle data. A technical benefit may include enhanced route planning capabilities, enabling the system to identify specific segments of a journey where engine stop freewheeling may be most advantageous, thereby further enhancing energy savings and reducing unnecessary engine operation.

Optionally in some examples, including in at least one preferred example, the processing circuitry may be configured to determine that the identified upcoming engine stop freewheeling mode opportunity fulfills at least one engine stop freewheeling mode condition. A technical benefit may include ensuring that the system only engages freewheeling mode under suitable conditions, which can help in maintaining vehicle stability, safety, and performance while also achieving energy efficiency.

Optionally in some examples, including in at least one preferred example, the identified upcoming engine stop freewheeling mode opportunity amounts to an identified upcoming downhill. A technical benefit may include more efficient use of gravitational forces to reduce engine load and fuel consumption during downhill segments, enhancing overall energy efficiency and reducing emissions.

Optionally in some examples, including in at least one preferred example, the processing circuitry may be configured to deactivate the engine stop freewheeling mode in response to a determined non-fulfillment of the at least one engine stop freewheeling mode condition. A technical benefit may include increased safety and reliability by ensuring that freewheeling mode is deactivated when conditions are not suitable, preventing potential driveline damage or loss of control.

Optionally in some examples, including in at least one preferred example, the processing circuitry may be configured to engage the tandem drive axle system in response to the deactivation of the engine stop freewheeling mode. A technical benefit may include a more seamless re-engagement of the tandem drive axle system, which can provides a more immediate power transmission when needed, ensuring that the vehicle can promptly respond to changing driving conditions.

Optionally in some examples, including in at least one preferred example, the processing circuitry may be further configured to predict an expected use of the tandem drive axle system and determine the allowability of disengaging the tandem drive axle system based on the predicted expected use. A technical benefit may include improved use of the tandem drive axle system by predicting future needs, thus balancing performance and efficiency while avoiding unnecessary wear and tear on the drivetrain.

Optionally in some examples, including in at least one preferred example, the processing circuitry may be configured to predict the expected use by predicting any needed utilization of the tandem drive axle system within a time frame. A technical benefit may include improved drivetrain management by accurately forecasting usage patterns, which helps in making informed decisions about when to engage or disengage the tandem drive axle system.

Optionally in some examples, including in at least one preferred example, the processing circuitry may be configured to disengage the tandem drive axle system after an activation of the engine stop freewheeling mode, before an activation of the engine stop freewheeling mode, or at the activation of the engine stop freewheeling mode. A technical benefit may include providing a more flexible control over the timing of disengagement, allowing the system to adapt to various driving scenarios for even further improved performance and reduced fuel consumption.

Typically, the first drive axle having a set of gears to output power to the second drive axle.

Optionally in some examples, including in at least one preferred example, the processing circuitry may be configured to control the powertrain system into the engine stop freewheeling mode by changing a rotating state of the output shaft to a non-rotating state, and disconnecting the engine from the drive wheels. A technical benefit may include a more precise control over the transition into the engine stop freewheeling mode, ensuring smooth and efficient disengagement of the engine.

Optionally in some examples, including in at least one preferred example, the processing circuitry is further configured to determine a starting point in time for the engine stop freewheeling mode based on topography data and vehicle data. A technical benefit may include enhanced timing accuracy for entering engine stop freewheeling mode, which may further enhance energy conservation by taking into account real-time driving conditions and vehicle performance metrics.

Optionally in some examples, including in at least one preferred example, the powertrain system further comprises a controllable clutch, the transmission arranged to be coupled to the internal combustion engine by means of the controllable clutch, and wherein the transmission further comprises an output shaft configured to be coupled to the first and second drive axles of the tandem drive axle system. A technical benefit may include better control over power transmission, allowing for smooth engagement and disengagement of the engine and transmission.

According to a second aspect of the disclosure, there is provided a vehicle comprising the powertrain system according to the first aspect. By way of example, the vehicle is a heavy-duty vehicle, such as a truck or the like. Optionally in some examples, including in at least one preferred example, the vehicle is an internal combustion engine vehicle (ICEV). An ICEV is a vehicle that relies solely on an internal combustion engine for propulsion, without the assistance of electric motors or fuel cells. Optionally in some examples, including in at least one preferred example, the vehicle is a non-electric vehicle. In this context, the term non-electric vehicle refers to a vehicle avoid of any electric storage and power system configured to provide traction power to the vehicle. Such electric storage system may be battery system in combination with an electric machine and/or fuel cell system in combination with an electric machine. In other words, a non-electric vehicle is a vehicle comprising the internal combustion engine as the primary, or the only, power source for the powertrain system. The use of the powertrain system may be particularly useful where the internal combustion engine is the only available power source for the vehicle.

The disclosure according to the second aspect may seek to reduce driveline resistance during so-called freewheeling with the engine shutdown, thus improving energy efficiency. The disclosure is based on the insight that controlling the suitable disengagement of the tandem drive axle system can enhance vehicle performance during freewheeling with the engine shutdown. Specifically, during this operational mode, the output shaft of the engine is non-rotating, and the engine is disconnected from the drive wheels. By managing the disengagement of the tandem drive axle system effectively, it becomes possible to reduce driveline resistance, thus improving energy efficiency. To this end, the aspect of the disclosure may seek to provide a powertrain system that includes a controller capable of predicting opportunities for operating in an engine stop freewheeling mode and subsequently disengaging the tandem drive axle system. The system aims to reduce mechanical resistance by allowing the second drive axle to free roll when it is not required for propulsion. Such reduction in resistance helps to conserve energy and improve overall efficiency, particularly during conditions where the vehicle can coast without the need for engine power. A technical benefit may include the enhanced control over the operational state of the powertrain system, particularly in terms of managing the disengagement of the tandem drive axle system. This control facilitates a reduction in driveline resistance during engine stop freewheeling modes, leading to improved energy efficiency. Additionally, the predictive capabilities of the system allow for timely disengagement of the tandem drive axle, enhancing the balance between performance and fuel economy. By reducing unnecessary mechanical drag, the system provides smoother transitions and better fuel savings during freewheeling with the engine off, such as during downhill travel. Mechanical drag typically refers to the internal resistive forces that oppose motion within the drivetrain. Reducing these forces through effective disengagement of the tandem drive axle system during engine stop freewheeling modes helps to improve energy efficiency and overall vehicle performance.

Optionally in some examples, including in at least one preferred example, the tandem drive axle system may be a rear tandem drive axle system of the vehicle.

According to a third aspect of the disclosure, there is provided a computer-implemented method for controlling a powertrain system of a vehicle, the powertrain system comprising a tandem drive axle system and an internal combustion engine configured to provide power to the tandem drive axle system via a transmission, the tandem drive axle system having a first drive axle connectable to a first set of drive wheels and a second drive axle connectable to a second set of drive wheels. Moreover, the tandem drive axle system is controllable to a disengaged state, in which the second drive axle is disengaged relative to the first drive axle, allowing the drive wheels of the second drive axle to free-rolling. Further, the powertrain system is operable in a number of operational modes comprising at least an engine stop freewheeling mode ES-FM, in which an output shaft of the engine is non-rotating, and the engine is disconnected from the drive wheels, wherein the method comprises predicting, by processing circuitry of a controller, an opportunity for operating the powertrain system in the engine stop freewheeling mode, determining, by the processing circuitry of the controller, to disengage the tandem drive axle system in response to the predicted opportunity for operating the powertrain system in the engine stop freewheeling mode, controlling, by the processing circuitry of the controller, the tandem drive axle system to the disengaged state, and controlling, by the processing circuitry of the controller, the powertrain system into the engine stop freewheeling mode.

The disclosure according to the fourth aspect may seek to reduce driveline resistance during so-called freewheeling with the engine shutdown, thus improving energy efficiency. The disclosure is based on the insight that controlling the suitable disengagement of the tandem drive axle system can enhance vehicle performance during freewheeling with the engine shutdown. Specifically, during this operational mode, the output shaft of the engine is non-rotating, and the engine is disconnected from the drive wheels. By managing the disengagement of the tandem drive axle system effectively, it becomes possible to reduce driveline resistance, thus improving energy efficiency. To this end, the aspect of the disclosure may seek to provide a powertrain system that includes a controller capable of predicting opportunities for operating in an engine stop freewheeling mode and subsequently disengaging the tandem drive axle system. The system aims to reduce mechanical resistance by allowing the second drive axle to free roll when it is not required for propulsion. Such reduction in resistance helps to conserve energy and improve overall efficiency, particularly during conditions where the vehicle can coast without the need for engine power. A technical benefit may include the enhanced control over the operational state of the powertrain system, particularly in terms of managing the disengagement of the tandem drive axle system. This control facilitates a reduction in driveline resistance during freewheeling modes, leading to improved energy efficiency. Additionally, the predictive capabilities of the system allow for timely disengagement of the tandem drive axle, enhancing the balance between performance and fuel economy. By reducing unnecessary mechanical drag, the system provides smoother transitions and better fuel savings during freewheeling with the engine off, such as during downhill travel. Mechanical drag typically refers to the internal resistive forces that oppose motion within the drivetrain. Reducing these forces through effective disengagement of the tandem drive axle system during engine stop freewheeling modes helps to improve energy efficiency and overall vehicle performance.

According to a fifth aspect of the disclosure, there is provided a computer program product comprising program code for performing, when executed by the processing circuitry of the first aspect, the method of the fourth aspect.

According to a sixth aspect of the disclosure, there is provided a non-transitory computer-readable storage medium comprising instructions, which when executed by the processing circuitry of the first aspect, cause the processing circuitry to perform the method of fourth aspect.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** illustrates an exemplary view of a vehicle comprising a powertrain system and a computer system having processing circuitry configured to control the powertrain system according to an example.
**FIG. 2** illustrates an example of controlling a powertrain system of a vehicle according to an example.
**FIG. 3** is a flow chart of an exemplary method for controlling a powertrain system of a vehicle according to an example.
**FIG. 4** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

In the field of vehicles, there is an increasing demand for improving the fuel efficiency and reducing emissions of the internal combustion engine (ICE). One operation for enhancing fuel efficiency and lowering emissions in a powertrain system is referred to as freewheeling. Freewheeling is commonly applied in heavy-duty vehicles. The purpose of freewheeling in heavy-duty vehicles is to save fuel and reduce engine load under certain driving conditions. Freewheeling is commonly used when the vehicle is descending downhill or traveling on a slope. There are typically two types of freewheeling modes. In one type of freewheeling operation, the engine is disconnected or disengaged from the driving wheel(s), allowing the vehicle to coast freely (in contrast to a conventional coasting mode). Hereby, the heavy-duty vehicle can take advantage of gravitational forces to maintain or increase speed while consuming minimal fuel. This type of freewheeling operation can be particularly useful for improving fuel efficiency and reducing wear and tear on the braking system during downhill descents. Freewheeling can be engaged manually by the driver or automatically by the vehicle's control system, e.g. as a part of the automatic and predictive engine stop-and-start system. When the driver and/or an automatic vehicle control system initiates freewheeling, the transmission is typically shifted to a neutral or coasting position, decoupling the engine from the drivetrain. In some cases, the engine may idle at a minimal RPM to maintain essential functions like power steering and braking. This mode of operation may be denoted as a freewheeling mode with the engine disconnected.

Freewheeling may also include a specific mode of operation where the engine is typically shut down (in addition to being disconnected from the driving wheels). More specifically, in the context of the present disclosure, this freewheeling mode refers to an operational mode in which the output shaft of the engine is non-rotating, and the engine is disconnected from the drive wheels. An operational mode where the output shaft of the engine is non-rotating typically signifies that the engine is in a non-active state, such as in a shutdown state, engine off state, standby mode. By way of example, in such freewheeling mode, the engine is thus shut down, and not engaged with the drivetrain for propulsion. In addition, no fuel is supplied to the engine. For ease of reference, this freewheeling mode is denoted as the engine stop freewheeling mode (ES-FM). The engine stop freewheeling mode refers to a freewheeling mode with the engine shut down, and disconnected from the drive wheel(s).

Operating the powertrain system in the engine stop freewheeling mode ES-FM contributes to even better fuel consumption and reduced emissions. Additionally, the engine stop freewheeling mode ES-FM allows for quicker attainment of the target speed, as compared to other operational modes, such as the coasting mode, wherein the engine remains connected to the driving wheels. The engine stop freewheeling mode ES-FM thus facilitates more efficient acceleration and speed management, particularly in situations such as downhill driving. As such, prolonging the operation of the powertrain system in the engine stop freewheeling mode ES-FM enables the maintenance of a higher average speed.

The disclosure seeks to enhance fuel efficiency in vehicles with powertrain systems configured to be operated in a freewheeling mode with the engine shut down while the vehicle is in motion. More specifically, the disclosure seeks to reduce driveline resistance during so-called freewheeling with the engine shut down, thus improving energy efficiency. The disclosure is based on the insight that controlling the suitable disengagement of the tandem drive axle system can enhance vehicle performance during freewheeling with the engine shutdown. Specifically, during this operational mode, the output shaft of the engine is non-rotating, and the engine is disconnected from the drive wheels. By managing the disengagement of the tandem drive axle system effectively, it becomes possible to reduce driveline resistance, thus improving energy efficiency. To this end, the aspect of the disclosure may seek to provide a powertrain system that includes a controller capable of predicting opportunities for operating in a freewheeling mode and subsequently disengaging the tandem drive axle system. The system aims to reduce mechanical resistance by allowing the second drive axle to free roll when it is not required for propulsion. Such reduction in resistance helps to conserve energy and improve overall efficiency, particularly during conditions where the vehicle can coast without the need for engine power.

A technical benefit may include the enhanced control over the operational state of the powertrain system, particularly in terms of managing the disengagement of the tandem drive axle system. This control facilitates a reduction in driveline resistance during freewheeling modes, leading to improved energy efficiency. Additionally, the predictive capabilities of the system allow for timely disengagement of the tandem drive axle, enhancing the balance between performance and fuel economy. By reducing unnecessary mechanical drag, the system provides smoother transitions and better fuel savings during freewheeling with the engine off, such as during downhill travel. Mechanical drag typically refers to the internal resistive forces that oppose motion within the drivetrain. Reducing these forces through effective disengagement of the tandem drive axle system during freewheeling modes helps to improve energy efficiency and overall vehicle performance.

One example of a vehicle comprising a powertrains system will now be described in relation to a vehicle in the form of a heavy-duty vehicle, such as a truck.

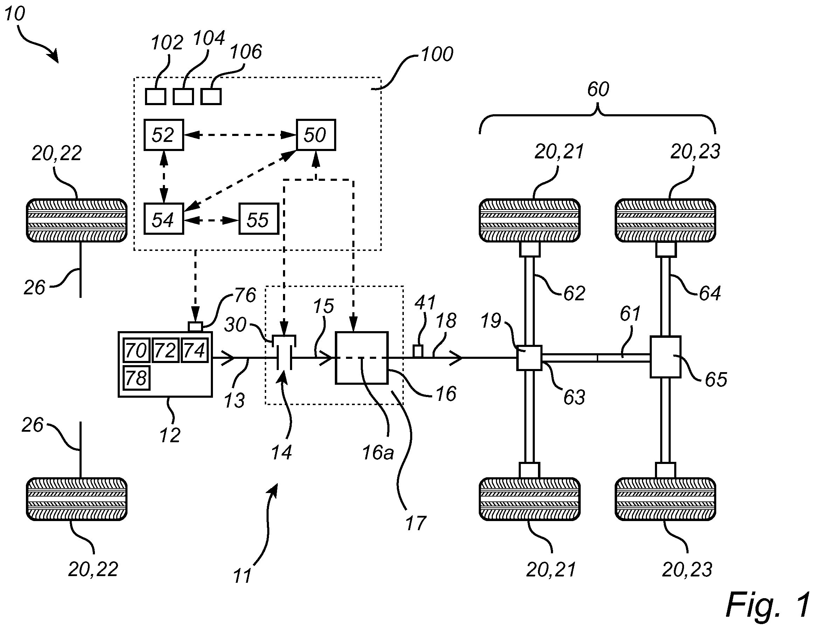

FIG. 1 schematically illustrates an exemplary vehicle 10. The vehicle 10 in FIG. 1 comprises a powertrain system 11. The powertrain system 11 is adapted to power the vehicle 10.

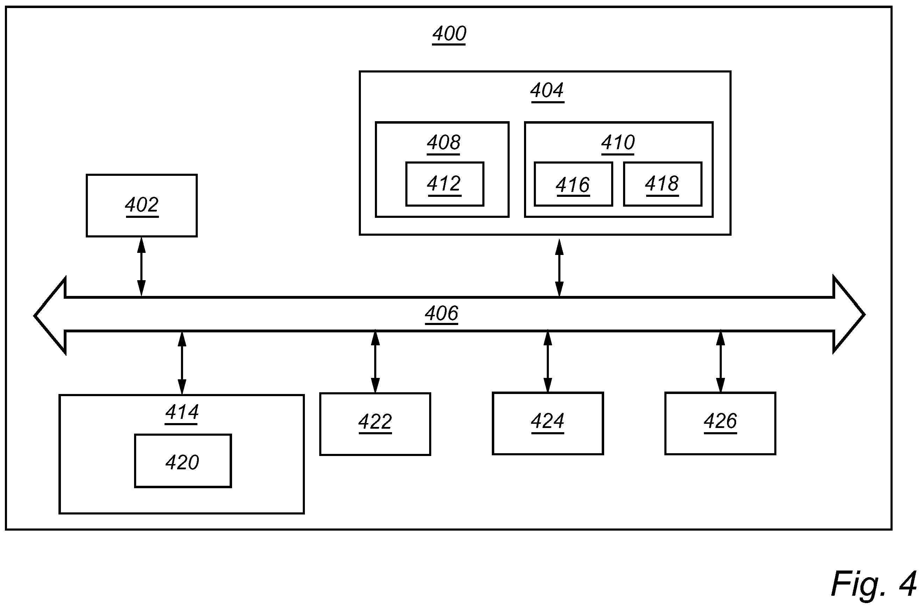

In addition, as depicted in FIG. 1, the vehicle 10 comprises a controller 100. The controller 100 is e.g. a computer system. In this example, the powertrain system 11 comprises the controller 100 in the form of a computer system. In other examples, the controller 100 is a separate part of the vehicle, which is configured to be in communication with the powertrain system 11. The controller 100 may also be a remote server configured to be in communication with the powertrain system 11. The controller 100 is configured to control the powertrain system 11. The controller 100 here comprises processing circuitry 102. The operations of the processing circuitry 102 will be further described herein. In FIG. 1, the controller 100 also comprises a memory 104 and a system bus 106. It should be noted that the controller 100, as described herein, may also be referred to as the computer system. Components and further optional technical details of one example of a controller in the form of a computer system are described in relation to FIG. 4.

The powertrain system 11 is operable in a number of operational modes, comprising at least the engine stop freewheeling mode ES-FM. In the engine stop freewheeling mode ES-FM, the output shaft of the engine is non-rotating, and the engine is disconnected from the drive wheels. For ease of reference, the engine stop freewheeling mode ES-FM will in the following be denoted as the freewheeling mode ES-FM. Typically, the controller 100 is configured to selectively operate the powertrain system 11 in a number of operational modes, comprising at least the engine stop freewheeling mode ES-FM.

Optionally, the controller 100 is configured to selectively operate the powertrain system 11 in a number of operational modes, comprising the engine stop freewheeling mode ES-FM, an additional freewheeling mode, denoted as an engine disconnected freewheeling mode (ED-FM), in which an output shaft of the engine is rotating, the engine is disconnected from the wheels, and fuel is being supplied to the engine; in a coasting mode CM, in which the output shaft of the engine is rotating, the engine is connected to the drive wheels, and fuel supply to the engine is interrupted; and in an engine braking mode EBM, in which the output shaft of the engine is rotating, the engine is connected to the drive wheels, and the engine is operated so as to generate a braking effect.

In addition, the controller 100 is configured to control engine shutdown, while the vehicle 10 is moving. In addition, the controller 100 is typically configured to control engine restart, while the vehicle 10 is moving. The controller 100 is thus configured to restart the engine of the vehicle 10, while the vehicle 10 is moving.

Turning again to FIG. 1, the powertrain system 11 comprises an internal combustion engine 12. For ease of reference, the internal combustion engine is herein typically denoted as the engine, or sometimes as the ICE. The engine 12 comprises at least one cylinder 74 having a combustion chamber 70 and a reciprocating piston 72. More specifically, the engine 12 comprises a plurality of cylinders 74, each one having a corresponding combustion chamber 70 and a corresponding piston 72 arranged therein.

The powertrain system 11 also comprises a fuel injector 78, as illustrated in FIG. 1. The fuel injector 78 is here an integral part of the engine 12. The fuel injector 78 is configured to inject fuel into the engine 12. The fuel injector 78 may be any suitable type of injector capable of injecting fuel such as a diesel fuel, a gaseous fuel and the like. Typically, the fuel injector 78 is arranged in the cylinder 74, and axially above the piston 72. Each one of the cylinders 74 of the engine 12 comprises a corresponding fuel injector 78. The fuel injector 78 is controllable by the controller 100. By way of example, the fuel injector 78 is controllable by the processing circuitry 102. The fuel injector 78 is controlled by the processing circuitry 102 in order to allow the controller 100 to switch between the various modes of the powertrain system 11, such as the engine stop freewheeling mode ES-FM, as described herein.

The engine 12 is configured to output a rotational speed via an engine output shaft 13, also referred to as the output shaft of the engine 12, as illustrated in e.g. FIG. 1. Hence, the powertrain system 11 comprises the engine output shaft 13. The engine output shaft 13 can either be in a rotating state or in a non-rotating state. When the engine output shaft 13 rotates, the engine 12 is typically turned on, while when the engine output shaft 13 is non-rotating, the engine 12 is typically shut down.

The engine 12 is typically also configured to operate in a conventional four stroke fashion, i.e. operated by an intake stroke, a compression stroke, a combustion stroke, and an exhaust stroke. In this example, the engine is an internal diesel combustion engine, i.e. an engine designed to work according to the diesel process. By way of example, the engine 12 is a compression ignition internal combustion engine. The engine 12 may also be provided in other types of configurations or be operated by other types of fuels. The components of an engine are well-known, and thus not further described herein.

The powertrain system 11 here also comprises a starter motor 76. The starter motor 76 is here an integral part of the engine 12. Alternatively, the starter motor 76 is operatively connected to the engine 12 to allow the starter motor 76 to crank the engine 12, as is commonly known in the art. As such, the starter motor 76 is configured to crank the engine 12. Engine cranking is performed by controlling the starter motor 76 to engage a flywheel so as to initiate combustion.

Moreover, the powertrain system 11 comprises a transmission arrangement 17. The transmission arrangement 17 comprises a gearbox 16 and a controllable clutch 14.

The gearbox 16 has a number of gear stages to obtain a set of gears. Each one of the gears has a corresponding gear ratio. The transmission arrangement 17 may sometimes be denoted simply as the transmission.

The transmission arrangement 17 is operatively connected to the engine 12 via a transmission input shaft 15. Therefore, the transmission arrangement 17 comprises the transmission input shaft 15. The transmission input shaft 15 rotates with a certain rotational speed while the vehicle 10 is moving. Hence, the transmission input shaft 15 has a corresponding rotational speed. The transmission input shaft 15 is one example of a powertrain shaft. The transmission arrangement 17 also has a transmission output shaft 18 for providing a rotational speed to one or more set of drive wheels 20, 21, 23 of the vehicle 10, as schematically illustrated in FIG. 1. Briefly stated, the engine output shaft 13 transmits rotational speed from the engine 12 to the transmission arrangement 17 which further transmits the motion via the transmission output shaft 18 to the drive wheels 20, 21, 23, which in FIG. 1 is a first set of rear drive wheels 21 and a second set of rear drive wheel 23.

The transmission output shaft 18 rotates with a certain rotational speed while the vehicle 10 is moving. Hence, the transmission output shaft 18 has a corresponding rotational speed. The transmission output shaft 18 is another example of a powertrain shaft.

Moreover, the vehicle 10 comprises a tandem drive axle system 60, as illustrated in Fig. 1. The engine 12 is configured to provide power to the tandem drive axle system 60. As illustrated in Fig. 1, the engine 12 is configured to provide power to the tandem drive axle system 60 via the transmission 17. The tandem drive axle system 60 is a common system of a heavy-duty vehicle. By way of example, the tandem drive axle system 60 comprises a first drive axle 62 and a second drive axle 64.

The tandem drive axle system 60 is controllable to a disengaged state, in which the second drive axle 64 is disengaged relative to the first drive axle 62. In the disengaged state of the tandem drive axle system 60, no power is transferred from the first drive axle 62 to the second drive axle 64. Hence, the second drive axle 64 is in a non-driven state in the disengaged state of the tandem drive axle system 60. As such, the second drive axle 64 is capable of free-rolling. In the free-rolling state, the second drive axle 64 is mechanically disconnected from the first drive axle 62.

Typically, the first drive axle 62 is configured to receive power from the engine 12 and transmit torque to the first set of drive wheels 21, which here is a first pair of rear drive wheels. Analogously, the second drive axle 64 is configured to transmit torque to the second set of drive wheels 23, which here is a second pair of rear drive wheels. The tandem drive axle system 60 typically comprises a set of gears 63 for interconnecting the first drive axle 62 and the second drive axle 64, wherein the set of gears 63 is configured to transfer torque from the first drive axle 62 to the second drive axle 64. By way of example, the first drive axle 62 comprises a set of gears 63 to output power to the second drive axle 64.

As illustrated in FIG. 1, the tandem drive axle system 60 further comprises a differential unit 19 integrated within the first drive axle 62, configured to distribute torque between the left and right wheels of the first pair of wheels 21.

As illustrated in FIG. 1, the engine 12 is configured to provide power to the tandem drive axle system 60 via the transmission 17 to the output shaft 18 and subsequently to the drive axles 62 and 64 via a set of differential devices 19 and 65. The differential devices 19 and 65 form the differential function of the tandem drive axle system 60.

As such, the vehicle 10 also includes a differential function arranged in-between the pair of driven wheels 21 and the transmission arrangement 17, and typically in-between the pair of driven wheels 23 and the first drive axles 62. The differential function mechanically (operatively) connects the output shaft 18 of the transmission arrangement 17 with the first drive axle 62, and typically with the second drive axle 64. By means of the differential device 19 and differential device 65, the engine 12 can be connected to the drive wheels, such as the drive wheels 21 and the drive wheels 23. Differential devices are well-known standard components and thus not further described herein.

The tandem drive axle system 60 is controllable to a disengaged state, in which the second drive axle 64 is disengaged relative to the first drive axle 62. In the disengaged state of the tandem drive axle system 60, no power is transferred from the first drive axle 62 to the second drive axle 64. Hence, the second drive axle 64 is in a non-driven state in the disengaged state of the tandem drive axle system 60.

As mentioned above, the tandem drive axle system 60 is controllable to the disengaged state, in which the second drive axle 64 is disengaged relative to the first drive axle 62. Typically, the tandem drive axle system 60 further comprises a disengagement device 61 associated with the second drive axle 64, configured to allow the second drive axle 64 to be disengaged from the first drive axle 62. By way of example, the disengagement device 61 comprises clutch in cooperation with a shaft from the differential device 19 and a shaft from the differential device 65, as schematically illustrated in Fig. 1.

The controller 100 is configured to activate the disengagement device 61, enabling the second drive axle 64 to enter a free-rolling state where it is mechanically disconnected from the first drive axle 62. For example, the disengagement device 61 is operable by an actuator controlled by controller 100.

As such, the tandem drive axle system 60 is configured to set the second drive axle 64 in a disengaged state relative to the first drive axle 62, allowing the drive wheels 23 of the second drive axle 64 to free rolling. In this manner, the second drive axle 64 is mechanically disconnected from the drive axle 62, and thus from the engine 12.

Alternatively, or in addition, the tandem drive axle system 60 is configured to set the second drive axle 64 in the disengaged state relative to the first drive axle 62 by controlling the set of gears 63 interconnecting the first drive axle 62 and the second drive axle 64. Hence, the second drive axle 64 can be disengaged from the first drive axle 62 in several different ways, as is commonly known within the field of tandem drive axle systems.

In some types of tandem drive axle systems, the second drive axle 64 may also be configured to be lifted from the road surface, for example, when the vehicle 10 is driving without any payload or with a lighter load. The tandem drive axle system 60 may thus comprise a pneumatic or hydraulic system configured to raise and lower the second drive axle 64. However, as described herein, it should be noted that the second drive axle 64 does not need to be lifted to free-roll. Rather, it is sufficient that the second drive axle 64 is disengaged relative to the first drive axle 62 to permit the second drive axle 64 to free-roll.

Optionally, the tandem drive axle system 60 comprises a suspension system (not shown) supporting the first and second drive axles 62, 64, configured to maintain stability and manage load distribution across the wheels.

The tandem drive axle system 60 is here a rear tandem drive axle system of the vehicle 10. As such, the tandem drive axle system 60 comprises the first pair of rear wheels 21 and the second pair of rear wheels 23. Moreover, the rear wheels 21 are here drive wheels. Analogously, the rear wheels 23 are configured to be drive wheels in the state when the second drive axle 64 is engaged with the first drive axle 62.

The drive wheels 21 are operatively connected to corresponding rotational drive axles 62. The drive wheels 21 are driven by the powertrain system 11. As such, the drive wheels 21 are configured to be driven by the engine 12.

Analogously, the drive wheels 23 are operatively connected to corresponding rotational drive axles 64. The drive wheels 23 are driven by the powertrain system 11. As such, the drive wheels 23 are configured to be driven by the engine 12.

As illustrated in FIG. 1, the vehicle 10 here comprises a pair of front wheels 22. The front wheels 22 are here non-driven wheels. The non-driven wheels 22 are operatively connected to corresponding rotational non-driven axles 26. Typically, the vehicle 10 comprises one or more driven wheels in the form of the drive wheels 21, 23 and one or more non-driven wheels. As such, the pair of front wheels 22 are here operatively connected to the respective non-driven axles 26. In a similar vein, the pair of rear wheels 21 are here operatively connected to the respective driven axle 62, and the pair of rear wheels 23 are here operatively connected to the respective driven axle 64.

The transmission arrangement 17 is one of a semi-automatic transmission arrangement and an automatic transmission arrangement. Automatic transmission arrangements are common in heavy-duty vehicles to control engagement and disengagement of e.g. an automated disk-clutch between the engine and the transmission arrangement. An automatic transmission arrangement is typically made up of the input shaft 15, the intermediate shaft 16a, which has at least one gearwheel in engagement with a gearwheel on the input shaft 15, and an internal main shaft (not shown) with gearwheels which engage with gearwheels on the intermediate shaft 16a. The internal main shaft is also connected to the transmission output shaft 18 coupled to the tandem drive axle system 60, and further to e.g. the drive (driving) wheels 21, 23 via, for example, the drive shafts 62, 64, respectively.

The drive shaft 62 rotates with a certain rotational speed while the vehicle 10 is moving. Hence, the drive shaft 62 has a corresponding rotational speed. The drive shaft 62 is another example of a powertrain shaft. Analogously the drive shaft 64 rotates with a certain rotational speed while the vehicle 10 is moving. Hence, the drive shaft 64 has a corresponding rotational speed. The drive shaft 64 is another example of a powertrain shaft.

In one example, when the transmission arrangement 17 comprises the intermediate shaft 16a arranged in the transmission arrangement 17, the transmission intermediate shaft 16a rotates with a certain rotational speed while the vehicle is moving. Hence, the transmission intermediate shaft 16a has a corresponding rotational speed. The transmission intermediate shaft 16a is another example of a powertrain shaft.

The transmission arrangement 17 is in this example an automated manual transmission (AMT), configured to transmit torque to the drive wheels 21, 23. Typically, the transmission arrangement 17 is configured to transmit torque to the drive wheels 21, 23 via the transmission output shaft 18 via one or more driven wheel shafts 62, 64 or the like. In other words, the vehicle 10 is typically provided with an engine 12 operatively connected to the transmission arrangement 17, such as an automated manual transmission (AMT), for transmitting torque to the vehicle driven wheels 21, 23.

As mentioned above, and as also illustrated in FIG. 1, the powertrain system 11 also comprises the clutch 14. The clutch 14 is here a controllable clutch. The controllable clutch 14 is e.g. controllable by the processing circuitry 102 of the controller 100. Hence, the term controllable clutch refers to a clutch that is configured to be controllable by a controller comprising processing circuitry, such as the processing circuitry 102. For ease of reference, the controllable clutch may simply be referred to as the clutch 14. The clutch 14 can be arranged in several manners in the powertrain system 11. In FIG. 1, the controllable clutch 14 is arranged in-between the engine 12 and the transmission arrangement 17. The controllable clutch 14 is configured to operatively connect the transmission arrangement 17 with the engine 12. In particular, the controllable clutch 14 is configured to operatively connect the engine output shaft 13 of the engine 12 to the transmission input shaft 15 of the transmission arrangement 17. As such, the engine output shaft 13 of the engine 12 can be operatively connected to the transmission input shaft 15 of the transmission arrangement 17 via the controllable clutch 14 when a gear is engaged. As is commonly known in the art, the transmission arrangement 17 and the clutch 14 are hereby operable to select a gear ratio between the engine 12 and a pair of the driven wheels 21. While FIG. 1 schematically illustrates an example where the transmission arrangement 17 includes the controllable clutch 14, the controllable clutch 14 can also be a stand-alone device of the powertrain system 11.

The controllable clutch 14 is a mechanical component configured to transfers power from the engine 12 into the transmission arrangement 17. Moreover, the controllable clutch 14 is configured to disconnect the engine 12 from the gearbox 16 and the rest of the transmission arrangement 17, when required. The controllable clutch 14 is here configured for transmitting the rotational torque from the engine 12 to the driven wheels 21. By way of example, the controllable clutch 14 is one of a single clutch unit, a dual-clutch unit, or any other type of multi-clutch unit.

The controllable clutch 14 is controlled by the controller 100. In particular, the controllable clutch 14 is controlled by the processing circuitry 102. By way of example, the controllable clutch 14 is controlled by the processing circuitry 102 via a clutch actuator 30, as illustrated in FIG. 1. The controllable clutch 14 allows the controller 100 to engage or disengage the engine's power from the wheels. The controllable clutch 14 is thus configured to engage the engine 12 to the gearbox 16 as well as to disengage the engine 12 from the gearbox 16. The controllable clutch 14 can also be used to allow smooth standing starts through clutch control, which partially engages allowing the clutch to slip. In this example, the controllable clutch 14 is also controlled to restart the engine 12 while the vehicle 10 is moving. As such, the controllable clutch 14 is used for restarting the engine 12.

By means of the clutch 14, the engine 12 can be connected to one or more drive wheels, such as the drive wheels 21, 23, of the tandem drive axle system 60. Also, by means of the clutch 14, the engine 12 can be disconnected from the drive wheels, such as the drive wheels 21, of the tandem drive axle system 60. The engine 12 may also be disconnected from the drive wheels 21 by setting the transmission 17 to neutral, meaning that no gear is engaged.

The vehicle 10 may optionally include a service brake unit (not shown). The service brake unit may be a wet brake type or a dry brake type. The service brake unit is typically configured for performing a brake function. As an example, the service brake unit is a wheel brake. In addition, a service brake unit may be provided for each wheel.

Turning again to the transmission arrangement 17. The transmission arrangement 17 may be configured to be controlled by the driver and/or automatically via an electronic control unit (ECU). One example of an ECU is a transmission control unit. In FIG. 1, the powertrain system 11 comprises the transmission control unit (TCU) 50. The transmission control unit may also be denoted as a transmission electronic control unit (TECU). By way of example, the TCU 50 is an integral part of the controller 100. The TCU 50 is configured to control the transmission arrangement 17. Hence, the TCU 50 is configured to control the controllable clutch 14 and the gearbox 16.

The controller 100 may also comprise an automatically controlled engine start system 54. The automatically controlled engine start system 54 is configured to automatically control the operation of shutting down the engine 12 and restarting the engine 12 while the vehicle 10 is moving. The automatically controlled engine start system 54 is here an integral part of an automatic and predictive engine stop-and-start system. Such system is configured to predict suitable situations where the engine 12 can be shut down and restarted, while the vehicle 10 is moving, and also configured to control the shutdown and restart of the engine 12, while the vehicle 10 is moving. The automatically controlled engine start system 54 may include a predictive cruise control system, or at least be configured to communicate with a predictive cruise control system of the vehicle 10. Hence, the controller 100 may also comprise a predictive cruise control system. The predictive cruise control system is here an automatic predictive cruise control system 55, as illustrated in FIG. 1. A predictive automatic cruise control system is for example configured to control a speed of the vehicle based on a vehicle target speed in automatic manner. The automatic predictive cruise control system 55 is also configured to control the speed of the vehicle in an automatic manner. Thus, the predictive automatic cruise control system 55 is configured to control the vehicle according to a vehicle target speed in an automatic manner. The controller 100 here comprises the automatic predictive cruise control system 55.

The predictive cruise control system 55 is configured to control the powertrain system 11 based on predicted changes in relation to the route ahead of the vehicle 10. A predictive cruise control system 55 may generally be configured to control the vehicle 10 based on topography and route data. The predictive cruise control system 55 may comprise, or communicate with, any one of a radar or lidar sensors used to detect vehicles and obstacles ahead, camera system to provide visual data about the road and traffic conditions, and GPS (Global Positioning System) to determine the vehicle position. The predictive cruise control system may further be configured to provide, or acquire, information about the road ahead, including changes in terrain, curves, and upcoming traffic conditions, speed and distance settings, brake control data, throttle control to maintain desired speed or accelerate, etc.

The predictive cruise control system 55 typically incorporates the basic functionalities of an automatic cruise control but adds predictive elements. For example, the predictive cruise control system 55 uses GPS and digital maps to anticipate road conditions ahead, such as curves, hills, and changes in the speed limit. Hereby, the predictive cruise control system 55 is configured to adjust the vehicle's speed proactively by considering the upcoming road conditions.

The engine 12 can be started by the starter motor 76. Typically, the processing circuitry 102 is configured to perform the restart engine by the starter motor 76. By way of example, the processing circuitry 102 is configured to control the starter motor 76 to engage the flywheel of the powertrain system 11 so as to initiate combustion, as is commonly referred to as an engine cranking operation. However, in this example, the engine 12 is typically started by controlling the controllable clutch 14 to a torque transfer position. In the torque transfer position, the controllable clutch 14 is set in a state in which torque is transferable between the engine 12 and the drive wheels 21 (here also corresponding to the rear wheels) of the tandem drive axle system 60. By controlling the controllable clutch 14 to the torque transfer position, the controllable clutch 14 is allowed to change a torque transfer between the engine 12 and the wheels 21. In this manner, the controller 100 is configured to perform the engine restart, as described herein. The controllable clutch 14 can be controlled in several different manners. By way of example, the controllable clutch 14 is controlled to gradually change the torque transfer between the engine 12 and the wheels 21. Alternatively, or in addition, the controllable clutch 14 can be controlled to change the torque transfer between the engine 12 and the wheels 21 in step-wise manner. Hence, the clutch 14 can either be set in a partly engaged state or in a fully engaged state start the engine.

As depicted in FIG. 1, the TCU 50 is also configured to be in communication with the automatically controlled engine start system 54. As such, the TCU 50 can control the controllable clutch 14 in response to data from the automatically controlled engine start system 54. In addition, the TCU 50 is here configured to be in communication with an electronic brake system (EBS) 52. The processing circuitry 102 can either be an integral part of the TCU, or a separate part configured to be in communication with the TCU 50.

In other examples, the TCU 50 comprises the automatically controlled engine start system 54. In addition, or alternatively, the TCU 50 comprises the predictive cruise control system 55.

The TCU 50 is here also configured to be in communication with an electronic control unit of the engine 12. Such electronic control unit may be denoted as an engine electronic control unit (EECU) or an engine management system (EMS). Both the TCU 50 and the EECU (and/or EMS) are typically integral parts of the controller 100.

In the following, an exemplary set of operations for controlling the powertrain system 11 of the heavy-duty vehicle 10 will be further described. The powertrains system 11 is controlled by the controller 100. The controller 100 is intended to control the powertrain system 11 of the vehicle 10, while the vehicle 10 is moving, i.e. in a non-stationary state. Accordingly, the controller 100 is configured to control the engine 12 of the vehicle 10 to the engine stop freewheeling mode ES-FM, while the vehicle 10 is moving.

The following operations may generally be performed by the processing circuitry 102 of the controller 100 so as to control the powertrain system 11, while the vehicle 10 is moving.

The processing circuitry 102 is configured to selectively operate the powertrain system 11 in the engine stop freewheeling mode ES-FM. In the engine stop freewheeling mode ES-FM, the output shaft 13 of the engine 12 is non-rotating, and the engine 12 is disconnected from the drive wheels 21, 23. As such, the engine 12 is disconnected from the first set of drive wheels 21 and from the second set of drive wheels 23. In other words, the engine 12 is disconnected from the first drive axle 62 and from the second drive axle 64.

The processing circuitry 102 is configured to select the engine stop freewheeling mode ES-FM and control the powertrain system 11 into the engine stop freewheeling mode ES-FM responsive to the following prediction operations.

Initially, the processing circuitry 102 is configured to predict an opportunity for operating the powertrain system 11 in the engine stop freewheeling mode ES-FM. For example, the processing circuitry 102 determines whether the vehicle 10 can be freewheeling in the freewheeling mode ES-FM along a road without falling below a minimum allowable speed. Such determination is typically based on topography data and vehicle data.

The prediction is performed when the vehicle 10 is in motion, and typically when the vehicle 10 is approaching a downgrade or another part of the route where it may be suitable to operate the powertrain system 11 in the freewheeling mode ES-FM.

As such, the processing circuitry 102 is configured to predict the opportunity for operating the powertrain system 11 in the engine stop freewheeling mode based on any one of topography data and vehicle data.

The opportunity for operating the powertrain system 11 in the engine stop freewheeling mode can be determined for the current position of the vehicle. In addition, or alternatively, the opportunity for operating the powertrain system 11 in the engine stop freewheeling mode relates to a position of the vehicle along the route ahead. In such example, the processing circuitry 102 is configured to identify an up-coming engine stop freewheeling mode opportunity along the route based on any one of topography data and vehicle data. Typically, although strictly not needed, the processing circuitry 102 uses both topography data and vehicle data to identify an up-coming engine stop freewheeling mode opportunity along the route. Moreover, in such example, the processing circuitry 102 is configured to determine that the identified up-coming engine stop freewheeling mode opportunity fulfills at least one engine stop freewheeling mode condition. For example, the engine stop freewheeling mode condition is indicative of a fuel-saving vehicle operation in comparison with continuing with the current operation mode, such as in comparison with having the engine on idle during the freewheeling operation, typically corresponding to the engine disconnected freewheeling mode.

Accordingly, the processing circuitry 102 is configured to assess fulfillment of engine stop freewheeling mode condition.

For example, the identified up-coming engine stop freewheeling mode opportunity amounts to an identified upcoming downhill.

For example, the processing circuitry 102 is configured to determine the opportunity for operating the powertrain system 11 in the engine stop freewheeling mode from topography data by analyzing and extracting relevant information about the route, including distance, elevation changes, road conditions, and other factors that can affect the vehicle's performance and fuel consumption. The processing circuitry 102 is configured to obtain topography data from various sources, such as digital maps, GPS data, or geographic information system (GIS) databases. These sources may generally include relevant information about the road network, including roads, highways, elevation data, and potential destinations. In one example, the topography data is received by the processing circuitry 102 from a route planner system in the vehicle. The topography data may likewise be acquired by a so-called look ahead device, which is typically an integral part of an ordinary cruise control system. The look ahead device may in addition, or alternatively, be an integral part of the controller 100.

In some examples, the processing circuitry 102 determines the opportunity for operating the powertrain system 11 in the engine stop freewheeling mode based on acquired vehicle data, such as the mass of vehicle 10, in combination with topography data, such as road gradient or inclination.

As such, the acquired vehicle data and topography data are decisive for determining whether the powertrain system 11 should be set into the engine stop freewheeling mode ES-FM. For example, the decision is made through a comparison with one or more threshold levels and/or by comparing against previous vehicle data stored in a memory as a look-up table.

From this acquired data, the processing circuitry 102 is also capable of assessing fulfillment of the engine stop freewheeling mode condition.

Determining or assessing fulfillment of the engine stop freewheeling mode condition can also be performed through a comparison with one or more threshold values indicative of fulfillment of the engine stop freewheeling mode condition. One example of an engine stop freewheeling mode condition is predicted vehicle speed. As such, the processing circuitry 102 is configured to predict vehicle speed and determine that the engine stop freewheeling mode condition is fulfilled if the predicted vehicle speed is below a threshold indicative of a maximum vehicle speed. Alternatively, the processing circuitry 102 is configured to predict vehicle speed and determine that the engine stop freewheeling mode condition is fulfilled if the predicted vehicle speed is above a threshold indicative of a minimum vehicle speed. Other engine stop freewheeling mode conditions may be exhaust aftertreatment system temperature and/or electric voltage level of the vehicle system.

In addition, or alternatively, the processing circuitry 102 is configured to predict the opportunity for operating the powertrain system 11 in the engine stop freewheeling mode based on topography data and vehicle data by determining fuel saving in response to the potential up-coming freewheeling mode period. For example, this is predicted fuel saving for having the engine 12 shut down during the freewheeling mode ES-FM. The fuel saving is determined from engine-idle fuel consumption data. Engine-idle fuel consumption data can be derived from a look-up table stored in the controller 100, such as in the memory of the controller 100. Engine-idle fuel consumption data is e.g. predetermined engine-idle fuel consumption data for the given type of vehicle and/or for the given type of engine model. The freewheeling mode period refers to a period for operating the powertrain system 11 in the freewheeling mode ES-FM. Hence, the fuel saving for the freewheeling mode ES-FM period is predicted in relation to a time period, and determined from engine-idle fuel consumption data indicative of operating the powertrain system 11 in an engine idle state over a corresponding time period. The fuel saving is thus a measure of the fuel saving of operating the engine in an idle state over a corresponding time period. The prediction is performed when the vehicle 10 is in motion, and typically when the vehicle 10 is approaching a downgrade or another part of the route where it may be suitable to operate the powertrain system 11 in the freewheeling mode ES-FM. The potential up-coming freewheeling mode period is here identified based on any one of topography data and vehicle data, as is commonly known in the art.

Then, the processing circuitry 102 is configured to determine to disengage the tandem drive axle system 60 in response to the predicted opportunity for operating the powertrain system 11 in the engine stop freewheeling mode ES-FM.

Subsequently, the processing circuitry 102 is configured to control the tandem drive axle system 60 to the disengaged state. As mentioned herein, disengaging the tandem drive axle system 60 means that the second drive axle 64 is set in the disengaged state relative to the first drive axle 62. Analogously, an engaged state of the tandem drive axle system 60 refers to a state in which the second drive axle 64 is engaged to the first drive axle 62, such that both the first drive axle 62 and the second drive axle 64 are powered by the engine 12.

As mentioned above, the tandem drive axle system 60 can be controllable to the disengaged state in several different manners, e.g., by the disengagement device 61.

The controller 100 controls the tandem drive axle system 60 to the disengaged state in response to the predicted opportunity for operating the powertrain system 11 in the engine stop freewheeling mode ES-FM. Moreover, the controller 100 is optionally configured to receive input from various sensors including speed sensors, torque sensors, and terrain sensors to determine and/or confirm prevailing conditions for engaging or disengaging the second drive axle 64.

Then, the processing circuitry 102 is configured to control the powertrain system 11 into the engine stop freewheeling mode ES-FM.

Hereby, the fuel efficiency is improved by collectively operating the powertrain system 11 in the engine stop freewheeling mode ES-FM and the second drive axle 64 in the free-rolling state (to reduce mechanical drag).

In one example, the processing circuitry 102 is further configured to predict an expected use of the tandem drive axle system 60 and determine allowability of disengaging the tandem drive axle system 60 based on the predicted expected use. In such an example, the processing circuitry 102 is configured to predict the expected use by predicting any needed utilization of the tandem drive axle system 60 within a time frame. For example, the time frame is defined by a threshold level. The time frame and the threshold level can be provided by a driver, an operator, and/or a remote-control server. The time frame, threshold level and/or data for setting the time frame and threshold may also be received by the controller 100 in advance. The time period can be a predefined time period, an estimated time period based on the road ahead and determined using topography data. In one example, the time period may correspond to the freewheeling mode period, such as the predicted upcoming freewheeling mode period. If it is determined that the tandem drive axle system 60 is not expected to be used within the time frame, the processing circuitry 102 determines to disengage the tandem drive axle system 60, as exemplified herein.

In one example, the processing circuitry 102 is configured to deactivate the engine stop freewheeling mode ES-FM in response to a determined non-fulfillment of the at least one engine stop freewheeling mode condition. In such example, the processing circuitry 102 is configured to engage the tandem drive axle system 60 in response to the deactivation of the engine stop freewheeling mode.

As such, based on the predicted opportunity for operating the powertrain system 11 in the engine stop freewheeling mode ES-FM, the processing circuitry 102 is configured to determine to control the tandem drive axle system 60 to the disengaged state and subsequently to determine to control the powertrain system 11 into the freewheeling mode ES-FM. To this end, the processing circuitry 102 determines whether the engine 12 should be shut down or not during freewheeling.

Then, the processing circuitry 102 is configured to control the powertrain system into the freewheeling mode ES-FM. Controlling the powertrain system 11 into the freewheeling mode ES-FM is here performed subsequent the tandem drive axle system is controlled to the disengaged state. However, a vice versa situation may also be possible. Hence, the processing circuitry 102 is configured to disengaging the tandem drive axle system 60 after an activation of the engine stop freewheeling mode ES-FM, before an activation of the engine stop freewheeling mode ES-FM, or at the activation of the engine stop freewheeling mode ES-FM.

For the sake of completeness, if the processing circuitry 102, determines that the freewheeling mode ES-FM is no longer suitable, the processing circuitry 102 typically controls, or maintain, the powertrain system 11 in the more conventional freewheeling mode with the engine turned on, while disconnected to the wheel(s).

As mentioned above, the processing circuitry 102 is configured to control the powertrain system 11 into the freewheeling mode ES-FM by changing a rotating state of the output shaft 13 to a non-rotating state, and disconnecting the engine 12 from the drive wheels 21, 23 of the tandem drive axle system 60.

The processing circuitry 102 is typically also configured to determine a starting point in time for the freewheeling mode ES-FM based on topography data and vehicle data.

The automatically controlled engine start system 54 is typically configured to automatically control the engine 12 of the powertrain system 11 of vehicle 10, such as the above modes, including shutdown of the engine 12 and engine restarts while the vehicle 10 is moving along the route. The automatically controlled engine start system 54 is configured to control the powertrain system 11 from vehicle data that can be gathered from various vehicle sensors, from a navigation system of the vehicle 10, from data received from one or more control units of the vehicle 10, and/or from various technologies and systems for tracking and monitoring the vehicle 10. Thus, the processing circuitry 102 is configured to receive data and store data in the memory 104 of the controller 100.

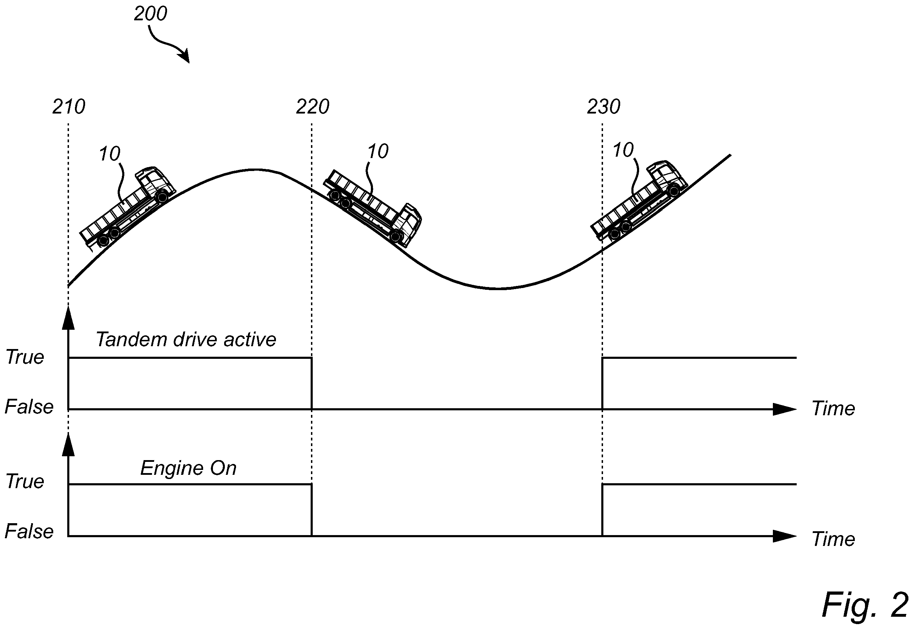

FIG. 2 illustrates an example of controlling a powertrain system of a vehicle, such as the powertrain system 11 of the vehicle 10 of FIG. 1, along a road, i.e. along an intended route 200 for the vehicle 10. More specifically, FIG. 2 schematically illustrates an example of a heavy-duty vehicle in the form of a loaded truck 10 driving uphill, over a crest and downhill, in which the controller 100 is used to control the powertrain system 11 according to the operations and methods, as described herein. While the vehicle 10 is in motion along the road, the processing circuitry 102 typically continuously simulates and predict the speed behavior of the vehicle 10 so as to identify an opportunity for the engine stop freewheeling mode ES-FM. As such, the processing circuitry 102 determines whether the vehicle 10 can be freewheeling in the engine stop freewheeling mode ES-FM along the road without falling below a minimum allowable speed.

For ease of reference, an extension of the intended route 200 is here indicated by a number of locations 210, 220 and 230 along the road. The road segment between location 210 and location 220 is indicative of an uphill road segment, location 220 is indicative of a crest segment, or slightly after the crest, and the road segment between location 220 and location 230 is indicative of a downhill segment and occasionally a flat and/or a slight uphill segment, as depicted in Fig.2. It should be noted that the crest is the highest point of a hill or slope in a road.

Along the route 200, the processing circuitry 102 acquires data from the predictive cruise control system 55 to determine and set a target speed for the vehicle 10. The processing circuitry 102 may also take input from the driver into account for setting the target speed. In this manner, the processing circuitry 102 determines the vehicle target speed for the vehicle 10. In this example, the processing circuitry 102 determines the vehicle target speed for the vehicle 10 as it travels uphill at location 210. The processing circuitry 102 may likewise determine, or estimate, the vehicle target speed for the vehicle 10 as it approaches the crest at 220 and the downhill segment at 230.

As illustrated, at location 210, the powertrain system 11 is in a propulsion mode, in which the engine 12 is providing power to the vehicle 10, i.e. proving torque to the drive axles 62, 64 and the drive wheels 22, 23 of the tandem drive axle system 60.

Typically, at, or at about location 210, the processing circuitry 102 predicts whether there is an opportunity to activate the freewheeling mode ES-FM for an upcoming road segment along the route 200. The processing circuitry 102 predicts the opportunity for operating the freewheeling mode ES-FM using topography data over the route 200. For example, at location 210, the processing circuitry 102 identifies a potential up-coming freewheeling mode period. The processing circuitry 102 identifies the potential up-coming freewheeling mode period using topography data over the route 200. The processing circuitry 102 may also include predicting the possibility of restarting the engine 12 when exiting the freewheeling mode ES-FM along an intended route 200, e.g. predicting the possibility of using the controllable clutch 14 for restarting the engine 12.

As mentioned herein, predicting the opportunity for operating the powertrain system 11 in the engine stop freewheeling mode ES-FM typically also involves using vehicle data, e.g. the mass of the vehicle 10.

In this example, the potential up-coming freewheeling mode period is identified to occur between location 220 and location 230, as depicted in FIG. 2.

Predicting the opportunity for operating the powertrain system 11 in the engine stop freewheeling mode ES-FM may also comprise predicting fuel saving in response to the potential up-coming freewheeling mode period. More specifically, the processing circuitry 102 predicts fuel saving in response to the potential up-coming freewheeling mode period. The fuel savings are determined from engine-idle fuel consumption data.

Moreover, as illustrated in Fig. 2, at location 210, the tandem drive axle system 60 is in an engage state, in which power from the engine 12 is transferred to both drive axles 62, 64.

At location 210, the processing circuitry 102 estimates whether the tandem drive axle system 60 can be set in the disengaged state at any point of time, or period of time, during the potential up-coming freewheeling mode period. In this example, the processing circuitry 102 determines that the tandem drive axle system 60 can be disengaged in response to the predicted opportunity for operating the powertrain system 11 in the engine stop freewheeling mode ES-FM during the potential up-coming freewheeling mode period (between 220 and 230).

In other words, at location 210, the processing circuitry 102 determines that the powertrain system 11 can be controlled into the freewheeling mode ES-FM at the location 220 and that the tandem drive axle system 60 can be disengaged at location 220.

The processing circuitry 102 also determines that the engine 12 should be shut down until location 230. The processing circuitry 102 also determines that the tandem drive axle system 60 should be disengaged until location 230. As such, the processing circuitry 102 determines that it is feasible for the powertrain system 11 to be operated in the freewheeling mode ES-FM with the second drive axle 64 in the disengaged state relative to the first drive axle 62, allowing the wheels 23 of the second drive axle 64 to free-rolling between locations 220 and 230.

Finally, when the vehicle 10 is at location 220, the processing circuitry 102 controls the tandem drive axle system 60 to the disengaged state, in which the second drive axle 64 is in the disengaged state relative to the first drive axle 62, and further controls the powertrain system 11 into the freewheeling mode ES-FM. As such, in the freewheeling mode ES-FM, in which the engine is turned off and disconnected from the tandem drive axle system 60, also the second drive axle 64 of tandem drive axle system 60 is disengaged relative to the first drive axle 62 of the tandem drive axle system 60. In such configuration of the powertrain system 11, both set of drive wheels 21, 23 are controlled to roll freely against the road surface. This is in contrast to a state of the powertrain system 11 in which the engine 12 is turned off and disconnected from the tandem drive axle system 60, but where the second drive axle 64 is connected to the first drive axle 62. In the latter state of the powertrain system 11, there is still a friction between the first drive axle 62 and the second drive axle 64 due to the engaged state between the axles 62, 64.

Then at location 230, the processing circuitry 102 controls the powertrain system 11 into a propulsion mode, in a conventional freewheeling mode, or an engine braking mode, while reactivating the tandem drive axle system 60. At this location, location 230, the engine 12 is restarted, e.g., by using the clutch 14.

When the tandem drive axle system 60 is reactivated, i.e. controlled to the engage state, the second drive axle 64 is set in an engaged state relative to the first drive axle 62, allowing the wheels 23 of the second drive axle 64 to be driven by the engine 12.

It should also be noted that the controller 100 can determine to set the freewheeling mode ES-FM responsive to other parameters and at other locations, e.g. before location 220. As such, the processing circuitry 102 determines whether the powertrain system 11 should enter, or be operated, in either the freewheeling mode ES-FM or the freewheeling mode ED-FM continuously along the route, e.g. on the crest, over the crest, or just after the crest. In this example, the operation of determining whether the powertrain system 11 should enter, or be operated, in one of the freewheeling modes along the route is performed in a predictive manner.

Moreover, when the powertrain system 11 is operating in the engine stop freewheeling mode ES-FM, the processing circuitry 102 typically determines to maintain the engine stop freewheeling mode ES-FM until reaching the vehicle target speed, or until a braking condition is fulfilled. In FIG. 2, this is reflected by the location 230 for ease of reference.

Determining that the target speed is reached is typically performed by the processing circuitry 102 in collaboration with the cruise control system 55, as commonly known in the art.

Determining fulfillment of the braking condition can be performed in several different ways by the controller 100. For example, the processing circuitry 102 determines fulfillment of the braking condition by predicting a maximum vehicle speed for the engine braking mode. The processing circuitry 102 then determines that the braking condition is fulfilled if the predicted maximum vehicle speed exceeds the vehicle target speed. The vehicle target speed typically refers to the allowable vehicle speed. The maximum vehicle speed for the engine braking mode is typically predicted from topography data and vehicle data, including data indicative of the gradient of the slope, the length of the slope, and the mass of the vehicle.

Upon the vehicle 10 is reaching the vehicle target speed in the engine stop freewheeling mode ES-FM, e.g. at location 230 in FIG. 2, the processing circuitry 102 determines to switch from the engine stop freewheeling mode ES-FM to another operational mode, such as the engine braking mode EBM. Alternatively, the processing circuitry 102 determines to switch from the engine stop freewheeling mode ES-FM to an operational mode in the form of the coasting mode, or a conventional propulsion mode. During such switch between the operational modes, the processing circuitry 102 typically also determine to re-engage, or reactive, the tandem drive axle system 60. As described herein, the engagement and disengagement of the tandem drive axle system 60 is performed by controlling the disengagement mechanism 61 between the first drive axle 62 and the second drive axle 64.

To this end, the processing circuitry 102 determines to control the powertrain system 11 to restart the engine 12. In this example, the engine 12 is restarted by the clutch 14. Likely, the engine restart using the controllable clutch 14 is successful given the previous prediction of determining the potential up-comping freewheeling mode period. In urgent situations, or if one or more conditions change, the engine 12 can be restarted by the starter motor.

Moreover, as mentioned herein, the processing circuitry 102 is configured to selectively operate the powertrain system 11 in a number of operational modes, typically comprising the engine disconnected freewheeling mode ED-FM, the engine stop freewheeling mode ES-FM, the coasting mode CM, and the engine braking mode EBM. In the context of the present disclosure, "engine disconnected freewheeling mode" refers to an operational mode in which an output shaft of the engine is rotating, the engine is disconnected from the drive wheels, and fuel is being supplied to the engine. An operational mode where the output shaft of the engine is rotating indicates that the engine is in an active state, such as in an operating mode, engine-on mode, power generation mode, or idling mode. In the engine disconnected freewheeling mode ED-FM, the engine is active and running, but not engaged with the drivetrain for propulsion.

Besides that the engine disconnected freewheeling mode ED-FM has a positive impact on fuel consumption, operating the powertrain system in the engine disconnected freewheeling mode ED-FM may be advantageous in operating situations where battery recharging may be needed. The engine disconnected freewheeling mode ED-FM allows the engine to run, thereby actively charging the battery, as e.g. opposed to the engine stop freewheeling mode ES-FM. In the latter, the engine is inactive (non-operating) and therefore unable to charge the battery, presenting a risk of inadequate battery power to restart the engine using the starter motor. Additionally, the engine disconnected freewheeling mode ED-FM may be beneficial in situations where the operating temperature of the engine exceeds normal thresholds, necessitating the activation of the engine cooling system for active thermal management.

Moreover, in the context of the present disclosure, the "coasting mode" (CM) refers to an operational mode in which the output shaft of the engine is rotating, the engine is connected to the drive wheels, and fuel supply to the engine being interrupted. In coasting mode, the vehicle moves by its own momentum with minimal engine resistance. Operating a vehicle in the coasting mode may also contribute to lowering the fuel consumption in comparison to a conventional propulsion mode, as fuel supply is interrupted in the coating mode.

Further, in the context of the present disclosure, the "engine braking mode" (EBM) refers to an operational mode in which the output shaft of the engine is rotating, the engine is connected to the drive wheels, and the engine is further operated so as to generate a braking effect. Operating the engine so as to generate a braking effect means that the engine is actively controlled to increase the internal resistance within the engine, thereby slowing down the vehicle. Engine braking increases engine load to create braking force, for example, by releasing compressed air from the cylinders just before the compression stroke completes (compression release) or creating back pressure in the exhaust system (exhaust brake) to slow down the vehicle. Engine braking may be particularly useful in heavy-duty vehicles for maintaining control and reducing speed on long downhill gradients without overheating the service brakes.

In the above modes, the fuel is supplied to the engine 12 by the fuel injector 78, as described herein. The control of fuel to the engine 12 is also controlled by controlling the fuel injector 12, as described herein.

The transitions between the various operational modes of the powertrain system 11, including the freewheeling modes, can be performed in an automatic manner by through the controller 100 in cooperation with e.g. an automatically controlled engine start system. The automatically controlled engine start system is typically an integral part of a so-called automatic and predictive engine stop-and-start system for vehicles. Automatic and predictive engine stop-and-start systems are configured to automatically control one or more vehicle and powertrains operations, such as shutting-down and restarting the engine, using predictive data and real-time information.

While the use of the automatic and predictive engine stop-and-start systems in heavy-duty vehicles provides a positive impact on the operation of the vehicle, there is still a challenge to determine a suitable transition between the available operational modes of the powertrain system including the freewheeling modes, and any other operational mode, such as propulsion mode, coasting mode, and engine braking mode.

As mentioned herein, the controller 100 may be an integral part of the powertrain system 11, wherein the powertrain system 11 comprises at least the engine 12, the controllable clutch 14, the transmission 17 arranged to be coupled to the engine 12 by means of the controllable clutch 14, and wherein the transmission 17 further comprises the output shaft 18 configured to be coupled to the tandem drive axle system 60. More specifically, the output shaft 18 configured to be coupled to the first and second drive axles 62, 64 of the tandem drive axle system 60.

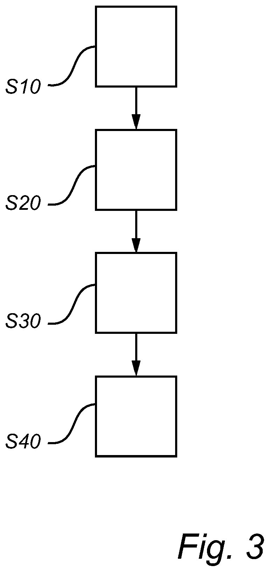

FIG. 3 is a flow chart of a method according to an example. More specifically, FIG. 3 is an exemplary computer implemented method 300 according to an example. The computer-implemented method 300 of FIG. 3 is also intended for controlling the powertrain system 11 of the heavy-duty vehicle 10 in FIG. 1. The method 300 is typically implemented by the processing circuitry 102. As mentioned above in relation to FIGS. 1 and 2, the powertrain system 11 is selectively operable in a number of operational modes, comprising at least the engine stop freewheeling mode ES-FM.

As illustrated in FIG. 3, the computer-implemented method 300 comprises a step S10 of predicting, by the processing circuitry 102 of the controller 100, an opportunity for operating the powertrain system in the engine stop freewheeling mode ES-FM.

Subsequently, the method comprises a step S20 of determining, by the processing circuitry 102 of the controller 100, to disengage the tandem drive axle system 60 in response to the predicted opportunity for operating the powertrain system 11 in engine stop freewheeling mode ES-FM.

Subsequently, the method comprises a step S30 of controlling, by the processing circuitry 102 of the controller 100, the tandem drive axle system 60 to the disengaged state.

Subsequently, the method comprises a step S40 of controlling, by the processing circuitry 102 of the controller 100, the powertrain system 11 into the engine stop freewheeling mode ES-FM.

It should be noted that the controller 100 may be an integral part of the powertrain system 11. In other examples, the controller 100 and the powertrain system 11 may be separate parts configured to communicate with each other. The controller 100 may also be a part of a remote server or the like. Hence, in some examples, there is provided a system comprising the powertrain system 11 and the controller 100, wherein the controller 100 is configured to be in communication with the powertrain system 11 so as to control the powertrain system 11 of the vehicle 10.

In some examples, there is provided a computer program product comprising program code for performing, when executed by the processing circuitry 102, the method 300 as described above.

In some examples, there is provided a non-transitory computer-readable storage medium comprising instructions, which when executed by the processing circuitry 102, cause the processing circuitry 102 to perform the method 300 as described above.

Further details of one example of a computer system 400 that can be used as the controller 100 will now be described in relation to FIG. 4.

FIG. 4 is a schematic diagram of a computer system 400 for implementing examples disclosed herein. The computer system 400 is adapted to execute instructions from a computer-readable medium to perform these and/or any of the functions or processing described herein. The computer system 400 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 400 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 400 may comprise at least one computing device or electronic device capable of including firmware, hardware, and/or executing software instructions to implement the functionality described herein. The computer system 400 may include processing circuitry 402 (e.g., processing circuitry including one or more processor devices or control units), a memory 404, and a system bus 406. The computer system 400 may include at least one computing device having the processing circuitry 402. The system bus 406 provides an interface for system components including, but not limited to, the memory 404 and the processing circuitry 402. The processing circuitry 402 may include any number of hardware components for conducting data or signal processing or for executing computer code stored in memory 404. The processing circuitry 402 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 402 may further include computer executable code that controls operation of the programmable device.

The system bus 406 may be any of several types of bus structures that may further interconnect to a memory bus (with or without a memory controller), a peripheral bus, and/or a local bus using any of a variety of bus architectures. The memory 404 may be one or more devices for storing data and/or computer code for completing or facilitating methods described herein. The memory 404 may include database components, object code components, script components, or other types of information structure for supporting the various activities herein. Any distributed or local memory device may be utilized with the systems and methods of this description. The memory 404 may be communicably connected to the processing circuitry 402 (e.g., via a circuit or any other wired, wireless, or network connection) and may include computer code for executing one or more processes described herein. The memory 404 may include non-volatile memory 408 (e.g., read-only memory (ROM), erasable programmable read-only memory (EPROM), electrically erasable programmable read-only memory (EEPROM), etc.), and volatile memory 410 (e.g., random-access memory (RAM)), or any other medium which can be used to carry or store desired program code in the form of machine-executable instructions or data structures and which can be accessed by a computer or other machine with processing circuitry 402. A basic input/output system (BIOS) 412 may be stored in the non-volatile memory 408 and can include the basic routines that help to transfer information between elements within the computer system 400.

The computer system 400 may further include or be coupled to a non-transitory computer-readable storage medium such as the storage device 414, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 414 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 414 and/or in the volatile memory 410, which may include an operating system 416 and/or one or more program modules 418. All or a portion of the examples disclosed herein may be implemented as a computer program 420 stored on a transitory or non-transitory computer-usable or computer-readable storage medium (e.g., single medium or multiple media), such as the storage device 414, which includes complex programming instructions (e.g., complex computer-readable program code) to cause the processing circuitry 402 to carry out actions described herein. Thus, the computer-readable program code of the computer program 420 can comprise software instructions for implementing the functionality of the examples described herein when executed by the processing circuitry 402. In some examples, the storage device 414 may be a computer program product (e.g., readable storage medium) storing the computer program 420 thereon, where at least a portion of a computer program 420 may be loadable (e.g., into a processor) for implementing the functionality of the examples described herein when executed by the processing circuitry 402. The processing circuitry 402 may serve as a controller or control system for the computer system 400 that is to implement the functionality described herein.

The computer system 400 may include an input device interface 422 configured to receive input and selections to be communicated to the computer system 400 when executing instructions, such as from a keyboard, mouse, touch-sensitive surface, etc. Such input devices may be connected to the processing circuitry 402 through the input device interface 422 coupled to the system bus 406 but can be connected through other interfaces, such as a parallel port, an Institute of Electrical and Electronic Engineers (IEEE) 1394 serial port, a Universal Serial Bus (USB) port, an IR interface, and the like. The computer system 400 may include an output device interface 424 configured to forward output, such as to a display, a video display unit (e.g., a liquid crystal display (LCD) or a cathode ray tube (CRT)). The computer system 400 may include a communications interface 426 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Moreover, the present disclosure may be exemplified by any one of the below examples.

Example 1: A powertrain system 11 for a vehicle 10, the powertrain system comprising: a tandem drive axle system 60 and an internal combustion engine 12 configured to provide power to the tandem drive axle system 60 via a transmission 17, the tandem drive axle system having a first drive axle 62 connectable to a first set of drive wheels 21 and a second drive axle 64 connectable to a second set of drive wheels 23, and further controllable to a disengaged state, in which the second drive axle is disengaged relative to the first drive axle, allowing the drive wheels of the second drive axle to free-roll, the powertrain system being operable in a number of operational modes, comprising at least an engine stop freewheeling mode ES-FM, in which an output shaft of the engine is non-rotating, and the engine is disconnected from the drive wheels; wherein the powertrain system further comprises a controller 100 comprising processing circuitry 102 configured to: predict an opportunity for operating the powertrain system in the engine stop freewheeling mode; determine to disengage the tandem drive axle system in response to the predicted opportunity for operating the powertrain system in the engine stop freewheeling mode; control the tandem drive axle system to the disengaged state; and control the powertrain system into the engine stop freewheeling mode.

Example 2. Powertrain system of example 1, wherein the processing circuitry is configured to predict an opportunity for operating the powertrain system in the engine stop freewheeling mode based on any one of topography data and vehicle data.

Example 3. Powertrain system of example 2, wherein the processing circuitry is configured to identify an up-coming engine stop freewheeling mode opportunity along a route based on any one of topography data and vehicle data.

Example 4. Powertrain system of example 3, wherein the processing circuitry is configured to determine that the identified up-coming engine stop freewheeling mode opportunity fulfills at least one engine stop freewheeling mode condition.

Example 5. Powertrain system of example 4, wherein the identified up-coming engine stop freewheeling mode opportunity amounts to an identified upcoming downhill.

Example 6. Powertrain system of any previous examples 4 to 5, wherein the processing circuitry is configured to deactivate the engine stop freewheeling mode in response to a determined non-fulfillment of the at least one engine stop freewheeling mode condition.

Example 7. Powertrain system of example 6, wherein the processing circuitry is configured to engage the tandem drive axle system in response to the deactivation of the engine stop freewheeling mode.

Example 8. Powertrain system of any previous examples, wherein the processing circuitry is further configured to predict an expected use of the tandem drive axle system and determine allowability of disengaging the tandem drive axle system based on the predicted expected use.

Example 9. Powertrain system of example 8, wherein the processing circuitry is configured to predict the expected use by predicting any needed utilization of the tandem drive axle system within a time frame.

Example 10. Powertrain system of any previous examples, wherein the processing circuitry is configured to disengaging the tandem drive axle system after an activation of the engine stop freewheeling mode, before an activation of the engine stop freewheeling mode, or at the activation of the engine stop freewheeling mode.

Example 11. Powertrain system of any previous examples, wherein the processing circuitry is configured to control the powertrain system into the engine stop freewheeling mode by changing a rotating state of the output shaft to a non-rotating state, and disconnecting the engine from the drive wheels.

Example 12. Powertrain system of any previous examples, wherein the processing circuitry is further configured to determine a starting point in time for the engine stop freewheeling mode based on topography data and vehicle data.

Example 13. Powertrain of any previous examples, further comprising a controllable clutch 14, the transmission 17 arranged to be coupled to the internal combustion engine by means of the controllable clutch, and wherein the transmission further comprises an output shaft 18 configured to be coupled to the drive axle 62 of the tandem drive axle system.

Example 14. A vehicle 1 comprising a powertrain system according to any previous examples.

Example 15. Vehicle according to example 14, wherein the tandem drive axle system is a rear tandem drive axle system of the vehicle.

Example 16. A computer-implemented method 300 for controlling a powertrain system 11 of a vehicle 10, the powertrain system comprising a tandem drive axle system 60 and an internal combustion engine 12 configured to provide power to the tandem drive axle system 60 via a transmission 17, the tandem drive axle system having a first drive axle 62 connectable to a first set of drive wheels and a second drive axle connectable to a second set of drive wheels, and further controllable to a disengaged state, in which the second drive axle is disengaged relative to the first drive axle, allowing the drive wheels of the second drive axle to free-roll, the powertrain system being operable in a number of operational modes, comprising at least an engine stop freewheeling mode ES-FM, in which an output shaft of the engine is non-rotating, and the engine is disconnected from the drive wheels, wherein the method comprises: predicting S 10, by processing circuitry 102 of a controller 100, an opportunity for operating the powertrain system in the engine stop freewheeling mode; determining S20, by the processing circuitry 102 of the controller 100, to disengage the tandem drive axle system in response to the predicted opportunity for operating the powertrain system in the engine stop freewheeling mode; controlling S30, by the processing circuitry 102 of the controller 100, the tandem drive axle system to the disengaged state; and controlling S40, by the processing circuitry 102 of the controller 100, the powertrain system into the engine stop freewheeling mode.

Example 17. A computer program product comprising program code for performing, when executed by the processing circuitry, the method of example 16.

Example 18. A non-transitory computer-readable storage medium comprising instructions, which when executed by the processing circuitry, cause the processing circuitry to perform the method of example 16.

The term "operatively connected", as used herein, typically means that a first component is in operative relation to another second component. By way of example, the term operatively connected means that the first component is connectable, or connected, to the second component in a manner allowing a transfer of a rotational movement and/or rotational torque from the first component to the second component. Therefore, the term encompasses a functional construction in which two components are connected such that the rotational speed of the first component corresponds to the rotational speed of the second component. However, the term also encompasses a functional construction in which there is a ratio between the rotational movement of the first component and the rotational movement of the second component, i.e., the rotational speed of the second component is proportional to the rotational speed of the first component.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A powertrain system (11) for a vehicle (10), the powertrain system comprising a tandem drive axle system (60) and an internal combustion engine (12) configured to provide power to the tandem drive axle system (60) via a transmission (17), the tandem drive axle system having a first drive axle (62) connectable to a first set of drive wheels (21) and a second drive axle (64) connectable to a second set of drive wheels (23), and further controllable to a disengaged state, in which the second drive axle is disengaged relative to the first drive axle, allowing the drive wheels of the second drive axle to free-roll, the powertrain system further being operable in a number of operational modes comprising at least an engine stop freewheeling mode (ES-FM), in which an output shaft of the engine is non-rotating, and the engine is disconnected from the drive wheels, wherein the powertrain system further comprises a controller (100) comprising processing circuitry (102) configured to:
- predict an opportunity for operating the powertrain system in the engine stop freewheeling mode;
- determine to disengage the tandem drive axle system in response to the predicted opportunity for operating the powertrain system in the engine stop freewheeling mode;
- control the tandem drive axle system to the disengaged state; and
- control the powertrain system into the engine stop freewheeling mode.

2. Powertrain system of claim 1, wherein the processing circuitry is configured to predict the opportunity for operating the powertrain system in the engine stop freewheeling mode based on any one of topography data and vehicle data.

3. Powertrain system of claim 2, wherein the processing circuitry is configured to identify an up-coming engine stop freewheeling mode opportunity along a route based on any one of topography data and vehicle data.

4. Powertrain system of claim 3, wherein the processing circuitry is configured to determine that the identified up-coming engine stop freewheeling mode opportunity fulfills at least one engine stop freewheeling mode condition.

5. Powertrain system of claim 4, wherein the processing circuitry is configured to deactivate the engine stop freewheeling mode in response to a determined non-fulfillment of the at least one engine stop freewheeling mode condition.

6. Powertrain system of claim 5, wherein the processing circuitry is configured to engage the tandem drive axle system in response to the deactivation of the engine stop freewheeling mode.

7. Powertrain system of any previous claims, wherein the processing circuitry is further configured to predict an expected use of the tandem drive axle system and determine allowability of disengaging the tandem drive axle system based on the predicted expected use.

8. Powertrain system of claim 7, wherein the processing circuitry is configured to predict the expected use by predicting any needed utilization of the tandem drive axle system within a time frame.

9. Powertrain system of any previous claims, wherein the processing circuitry is configured to control the powertrain system into the engine stop freewheeling mode by changing a rotating state of the output shaft to a non-rotating state, and disconnecting the engine from the drive wheels.

10. Powertrain of any previous claims, further comprising a controllable clutch (14), the transmission (17) arranged to be coupled to the internal combustion engine by means of the controllable clutch, and wherein the transmission further comprises an output shaft (18) configured to be coupled to the first and second drive axles of the tandem drive axle system.

11. A vehicle (1) comprising a powertrain system (11) according to any previous claims.

12. Vehicle according to claim 11, wherein the tandem drive axle system is a rear tandem drive axle system of the vehicle.

13. A computer-implemented method (300) for controlling a powertrain system (11) of a vehicle (10), the powertrain system comprising a tandem drive axle system (60) and an internal combustion engine (12) configured to provide power to the tandem drive axle system (60) via a transmission (17), the tandem drive axle system having a first drive axle (62) connectable to a first set of drive wheels (21) and a second drive axle (64) connectable to a second set of drive wheels (23), and further controllable to a disengaged state, in which the second drive axle is disengaged relative to the first drive axle, allowing the drive wheels of the second drive axle to free-roll, the powertrain system being operable in a number of operational modes comprising at least an engine stop freewheeling mode (ES-FM), in which an output shaft of the engine is non-rotating, and the engine is disconnected from the drive wheels, and wherein the method comprises:
- predicting (S10), by processing circuitry (102) of a controller (100), an opportunity for operating the powertrain system in the engine stop freewheeling mode;
- determining (S20), by the processing circuitry (102) of the controller (100), to disengage the tandem drive axle system in response to the predicted opportunity for operating the powertrain system in the engine stop freewheeling mode;
- controlling (S30), by the processing circuitry (102) of the controller (100), the tandem drive axle system to the disengaged state; and
- controlling (S40), by the processing circuitry (102) of the controller (100), the powertrain system into the engine stop freewheeling mode.

14. A computer program product comprising program code for performing, when executed by the processing circuitry, the method of claim 13.

15. A non-transitory computer-readable storage medium comprising instructions, which when executed by the processing circuitry, cause the processing circuitry to perform the method of claim 13.
